# EUROPÄISCHE PATENTANMELDUNG

(11) **EP 0 935 132 A2**
(43) Veröffentlichungstag der Anmeldung: **11.08.1999**
(21) Anmeldenummer: 99102084.3
(22) Anmeldetag: 02.02.1999
(51) Int. Cl.: G01N 21/63

(54) **Vorrichtung zur optischen Untersuchung von Proben**

(30) Priorität: 05.02.1998 DE 19804532
(71) Anmelder: Herolab GmbH, 69168 Wiesloch (DE)
(72) Erfinder: Knorr, Erhard, 69168 Wiesloch (DE)
(74) Vertreter: Naumann, Ulrich, Dr.-Ing.

(57) **Zusammenfassung**

Eine Vorrichtung zur optischen Untersuchung von Proben (1) mit einer Lichtquelle (2), die eine auf einem Träger (4) angeordnete Probe (1) anleuchtet, einer Bildaufnahmeeinrichtung (6) und einem zwischen Probe (1) und Bildaufnahmeeinrichtung (6) angeordneten Filter (5), wobei das Filter (5) für einen vordefinierten Wellenlängenbereich des von der Probe (1) ankommenden Lichts durchlässig ist und die Bildaufnahmeeinrichtung (6) das von der Probe (1) ankommende Licht aufnimmt. Erfindungsgemäß ist das Filter (5) zwischen Probe (1) und Bildaufnahmeeinrichtung (6) auf unterschiedliche Wellenlängenbereiche abstimmbar.

## Beschreibung

Die vorliegende Erfindung betrifft eine Vorrichtung zur optischen Untersuchung von Proben mit einer Lichtquelle, die eine auf einem Träger angeordnete Probe anleuchtet, einer Bildaufnahmeeinrichtung und einem zwischen Probe und Bildaufnahmeeinrichtung angeordneten Filter, wobei das Filter für einen vordefinierten Wellenlängenbereich des von der Probe ankommenden Lichts durchlässig ist und die Bildaufnahmeeinrichtung das von der Probe ankommende Licht aufnimmt. Außerdem betrifft die Erfindung ein Verfahren zur optischen Untersuchung von Proben.

Vorrichtungen zur optischen Untersuchung von Proben mit einer Lichtquelle, einem Filter und einer Kamera sind bekannt. Dabei werden Farbkameras eingesetzt, die ein Bild aller auftretenden Wellenlängenbereiche der lumineszierenden Probe aufnehmen. Ein Problem dabei besteht bei der Auswertung der Intesitätsverteilung bezüglich einer bestimmten Wellenlänge, die aus der Farbaufnahme über komplexe Algorithmen berechnet werden muß. Außerdem muß dabei, da Licht mit einer Belichtungswellenlänge zusammen mit dem von der Probe abgestrahlten Licht mit einer Lumineszenzwellenlänge aufgenommen wird, eine Untergrundberechnung durchgeführt werden. Auch Falschfarbendarstellungen, die das von der Probe abgestrahlte Licht gefärbt entsprechend seiner Wellenlänge darstellen, sind nach dem bekannten Verfahren nur umständlich herstellbar.

Der Erfindung liegt die Aufgabe zugrunde, eine Vorrichtung und ein Verfahren der genannten Art anzugeben, mit der eine Auswertung, Messung und/oder Darstellung des von der Probe abgestrahlten Lichts entsprechend der Wellenlänge vereinfacht wird.

Diese Aufgabe wird erfindungsgemäß durch die Merkmale des Anspruchs 1 gelöst. Danach ist das Filter zwischen Probe und Bildaufnahmeeinrichtung auf unterschiedliche Wellenlängenbereiche abstimmbar.

Erfindungsgemäß wurde erkannt, daß eine besonders vorteilhafte und systematische Auswertung des von der Probe abgestrahlten Lichts dadurch erzielt wird, daß ein zwischen Probe und Bildaufnahmeeinrichtung angeordnetes Filter auf unterschiedliche Wellenlängenbereiche abstimmbar ist. Dadurch kann das Filter nacheinander von einer niedrigen Wellenlänge beginnend zu einer großen Wellenlänge abgestimmt werden, und die Bildaufnahmeeinrichtung kann den einzelnen Lumineszenzwellenlängen entsprechende Aufnahmen durchführen. Dabei entstehen jeweils einer bestimmten Lumineszenzwellenlänge entsprechende Aufnahmen, die separat ausgewertet werden können und nach Beaufschlagung mit einem bestimmten Farbwert wieder zusammengesetzt werden.

Durch die Lichtquelle und über das Filter wird die Probe mit einer bestimmten Wellenlänge bestrahlt. Die Probe luminesziert in einer meist längeren Wellenlänge. Auf diese Lumineszenzwellenlänge wird das Filter eingestellt, und mit der Bildaufnahmeeinrichtung wird dann ein Bild aufgenommen. Wird nun weiterhin auch die Bestrahlungsfrequenz der Lichtquelle verändert, so kann systematisch ein den einzelnen Lumineszenzwellenlängen zugeordnetes Intensitätsverteilungskennfeld erstellt werden. Da die Proben oft mehrfarbig lumineszieren, werden alle Farben einzeln aufgenommen und später wieder zur Visualisierung zusammengesetzt. Die Messungen, Auswertungen oder Berechnungen erfolgen jedoch vorteilhaft aufgrund jedes einzelnen Bildes mit jeweils einer Lumineszenzwellenlänge.

Die Bildaufnahmeeinrichtung weist bevorzugt eine Kamera, insbesondere zur Aufnahme monochromatischer Einzelbilder einer bestimmten Wellenlänge auf. Die Lichtquelle und das Filter sind so angeordnet, daß die Kamera die Lichtquelle nicht direkt sieht. Dadurch muß keine komplexe Untergrundberechnung durchgeführt werden, da die Belichtungswellenlängen von den zu messenden Lumineszenzwellenlängen getrennt sind.

Durch ein Verarbeitungsmittel ist aus den den unterschiedlichen Wellenlängenbereichen zugeordneten Einzelbildern eine Gesamtdarstellung des Lumineszenzlichtes der Probe zusammensetzbar. Durch das dynamisch durchstimmbare Filter können beliebig viele Einzelbilder aufgenommen werden, die nach der Messung bspw. der Intensitätsverteilung wieder zusammengesetzt werden.

Das Verarbeitungsmittel ordnet jedem der, insbesondere monochromatischen Einzelbilder einen bestimmten Farbwert zu. Der Farbwert entspricht der Wellenlänge oder dem Wellenlängenbereich des abstimmbaren Filters. Dabei ist das abstimmbare Filter bevorzugt auf eine bestimmte Lumineszenzwellenlänge abgestimmt. Die Beaufschlagung mit dem Farbwert entspricht daher auch der Farbe des lumineszierenden Lichts. Andererseits kann dem aufgenommenen Bild aber auch ein Farbwert zugeordnet werden, der für eine Falschfarbendarstellung optimiert ist. Dabei kann jedem Einzelbild vom Bearbeiter willkürlich ein beliebiger Farbwert zur optimalen Darstellung der aufgenommenen Lumineszenzwellenlängen zugeordnet werden.

Bevorzugt sind die einzelnen, insbesondere monochromatischen Einzelbilder durch das Verarbeitungsmittel, insbesondere bezüglich der Lichtintensitätsverteilung, separat auswertbar. Der Vorteil gegenüber herkömmlichen Vorrichtungen zur optischen Untersuchung von Proben liegt darin, daß dadurch systematisch durch das abstimmbare Filter der gesamte Lumineszenzwellenbereich bezüglich einer Belichtungsfrequenz separat in Einzelbildern aufnehmbar ist. Zusätzlich kann durch Variation der Belichtungsfrequenz ein Intensitätsspektrum für einzelne Lumineszenzwellenlängen entstehen, wobei die Belichtungsfrequenz ein Parameter in der Darstellung sein kann. Nach dem Einfärben, Verarbeiten und Zusammensetzen der Einzelbilder entsteht ein Intensitätsverteilungskennfeld für alle Lumineszenzwellenlängen.

Das Verarbeitungsmittel steuert bevorzugt die Bildaufnahmeeinrichtung, insbesondere deren Belichtungszeit, Zoom oder Blende. Außerdem steuert das Verarbeitungsmittel das abstimmbare Filter hinsichtlich der Transparenz für bestimmte Lumineszenzwellenlängen. Das Verarbeitungsmittel kann einen Computer aufweisen, der je nach Meßverfahren, Aufnahmetechnik und gewünschter Gesamtdarstellung die Belichtungsfrequenz, die Lichtstärke oder die Durchlaßwellenlängen des abstimmbaren Filters einstellt.

Bevorzugt ist zur Einstellung der Belichtungsfrequenz ein Belichtungsfilter zwischen der Lichtquelle und dem Träger der Probe angeordnet. Dadurch kann als Lichtquelle bspw. eine Lasersignalquelle oder eine Lichtquelle mit homogen verteilten Belichtungswellenlängen vorgesehen sein, wobei der Belichtungsfilter lediglich Licht mit der gewünschten Belichtungsfrequenz zur Probe durchläßt.

Das Belichtungsfilter ist insbesondere durch das Verarbeitungsmittel auf eine bestimmte Wellenlänge abstimmbar. Das Verarbeitungsmittel steuert die Wellenlängenbereiche für den Lichtdurchlaß des Belichtungsfilters und des bestimmbaren Filters und stellt beide Wellenlängenbereiche unterschiedlich ein.

Bei einer ersten Weiterbildung der Erfindung, bei einer sog. Durchlichtanordnung, sind die Lichtquelle, eine transparente Probe, der abschirmbare Filter und die Bildaufnahmeeinrichtung im wesentlichen entlang einer lineraren Bestrahlungsachse angeordnet. Das von der Lichtquelle abgestrahlte Licht durchläuft den Belichtungsfilter und strahlt die auf einem Träger angeordnete transparente Probe an. Der Träger behindert dabei den Strahlengang des Lichts nicht. Die transparente Probe luminesziert angeregt durch das Licht der Belichtungswellenlänge, und das von der Pro-be abgestrahlte Licht wird von der Bildaufnahmeeinrichtung aufgenommen, wobei das abstimmbare Filter lediglich ein Licht einer Lumineszenzwellenlänge durchläßt.

Bei einer sog. Auflichtanordnung wird das Licht mit der Belichtungsfrequenz von der Lichtquelle abgestrahlt, durchläuft wahlweise einen Belichtungsfilter und bestrahlt die reflektierte Probe. Das wiederum von der Probe mit einer Lumineszenzwellenlänge abgestrahlte Licht durchläuft den abstimmbaren Filter und gelangt zur Bildaufnahmeeinrichtung, wobei eine durch Lichtquelle, Belichtungsfilter und reflektierende Probe gebildete Belichtungsachse im Meßraum mit anderer Orientierung angeordnet ist, als die Reflexionsachse, die durch den Strahlengang von der reflektierenden Probe durch das abstimmbare Filter zur Bildaufnahmeeinrichtung bestimmt ist.

Bevorzugt verhindert die Filteranordnung eine Direktbestrahlung der Bildaufnahmeeinrichtung durch das Licht der Lichtquelle. Eine komplexe Untergrundberechnung entfällt dabei.

Zur Einstellung der Belichtungsfrequenz, weist das Belichtungsfilter einen parallel zu mindestens einer Blende mit einem Spalt angeordneten, insbesondere parallel zu der Blende verschiebbaren Monochromator auf. Bevorzugt weist der Filter zwei parallel mit Abstand zueinander angeordnete Blenden mit jeweils einem Spalt auf. Zwischen den beiden Blenden ist ein parallel zu den Blendenebenen verschiebbarer Monochromator angeordnet, durch den, bei Verschieben, ein monochromes Licht unterschiedlicher Belichtungswellenlänge erzeugbar ist.

Das abstimmbare Filter ist durch das Bearbeitungsmittel elektrisch auf einen bestimmten Wellenlängenbereich einstellbar. Das abstimmbare Filter weist bevorzugt mehrere Filterebenen, insbesondere aus Glas- und Flüssigkristallschichten auf. Zusätzlich ist das abstimmbare Filter jeweils mit mehreren Kathoden- bzw. Anodenanschlüssen versehen, wodurch das abstimmbare Filter elektrisch ansteuerbar ist, um Licht einer vorgebbaren Lichtwellenlänge durchzulassen.

Die Aufgabe der vorliegenden Erfindung wird bezüglich eines Verfahrens auch durch die Merkmale des Anspruchs 18 gelöst. Danach wird eine Probe mit einem Licht mit einer einstellbaren Wellenlänge bestrahlt, wodurch die Probe ein Licht mit einer von der eingestellten Belichtungswellenlänge abweichenden Lumineszenzwellenlänge abstrahlt. Das Licht mit der Lumineszenzwellenlänge wird von einer Bildaufnahmeeinrichtung aufgenommen. Dabei wird das Licht mit einer bestimmten Lumineszenzwellenlänge durch ein abstimmbares Filter zwischen Probe und Bildaufnahmeeinrichtung durchgelassen und die Bildaufnahmeeinrichtung erstellt ein Einzelbild des von der Probe abgestrahlten Lichts.

Erfindungsgemäß wurde erkannt, daß durch eine Monochromkamera aufgenommene Einzelbilder des von der Probe abgestrahlten Lichts mit einer bestimmten Lumineszenzwellenlänge, sowohl für die Messungen verschiedener Meßgrößen an der Probe als auch für die darauffolgende Darstellung, bspw. einer Falschfarbendarstellung, gegenüber den herkömmlichen Verfahren erhebliche Vorteile aufweist. Z.B. können Messungen an bestimmten biologischen Geweben vorgenommen werden, wobei die erfindungsgemäße Systematik eine gute Reproduzierbarkeit der Messungen ermöglicht.

Erfindungsgemäß werden mehrere Einzelbilder bei unterschiedlichen Lumineszenzwellenlängen aufgenommen. Die Einzelbilder sind Monochromdarstellungen, die separat eingefärbt und zu einem Farbbild zusammengesetzt werden können. Entweder werden die Einzelbilder beim Einfärben mit der Farbe der Lumineszenzwellenlänge oder der Farbe für eine Falschfarbendarstellung eingefärbt.

Die Einzelbilder werden separat bearbeitet und insbesondere bezüglich der Lichtintensitätsverteilung untersucht. Abschließend lassen sich die Einzelbilder in einer Gesamtdarstellung optisch überlagern, wodurch bspw. Rückschlüsse auf eine bestimmte Stoffanordnung in einem Gewebe erzielt werden können.

Weitere vorteilhafte Ausführungsformen der Erfindung ergeben sich aus den Unteransprüchen und der Beschreibung. Mehrere Ausführungsbeispiele der Erfindung sind in der Zeichnung dargestellt und werden nachfolgend beschrieben. Es zeigen, jeweils in schematischer Darstellung,
- Fig. 1: den Aufbau einer Durchlichtanordnung der erfindungsgemäßen Vorrichtung nach einem ersten Ausführungsbeispiel,
- Fig. 2: den Aufbau eines abstimmbaren Filters gemäß der vorliegenden Erfindung,
- Fig. 3: einen Versuchsaufbau mit einem Verarbeitungsmittel gemäß der vorliegenden Erfindung,
- Fig. 4: eine Darstellung des Verfahrens zur optischen Untersuchung von Proben gemäß der vorliegenden Erfindung und
- Fig. 5: den Aufbau einer Auflichtanordnung der erfindungsgemäßen Vorrichtung nach einem zweiten Ausführungsbeispiel.

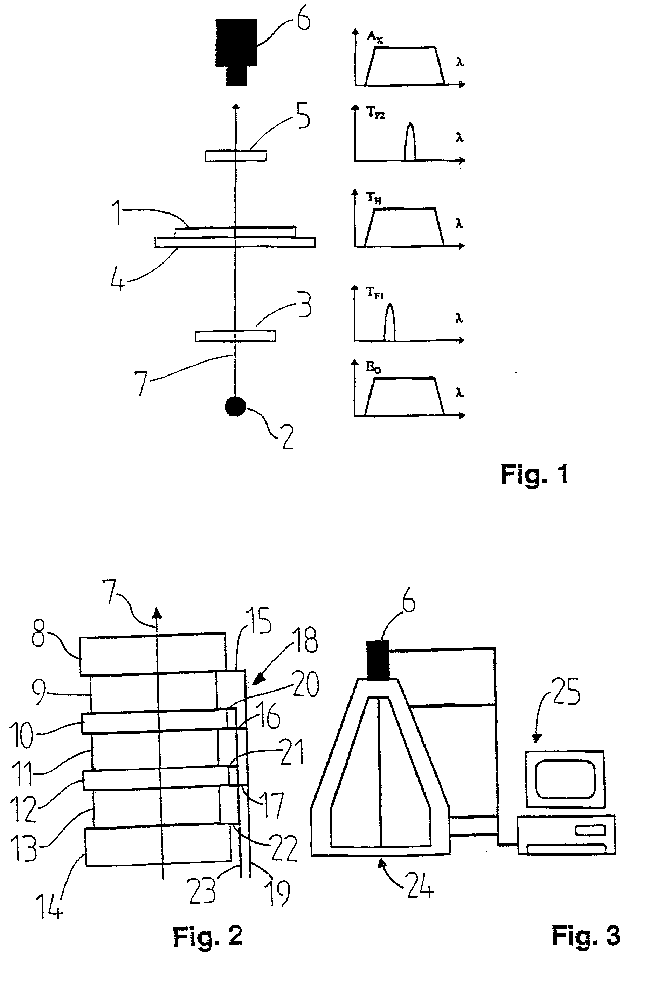

Die in Fig. 1 dargestellte Vorrichtung zur optischen Untersuchung von Proben 1 weist eine Lichtquelle 2, ein Belichtungsfilter 3, einen lichtdurchlässigen Träger 4, ein abstimmbares Filter 5 und eine Kamera 6 zur Aufnahme monochromatischer Einzelbilder auf.

Das mit der Emissionsenergie E_{Q} über einen weiten Wellenlängenbereich abgestrahlte Licht wird im Belichtungsfilter über eine Durchlässigkeitsfunktion T_{F1} auf einen Belichtungswellenlängenbereich von 20 bis 50 nm begrenzt und trifft auf die an einem Träger 4 angeordnete Probe 1 auf. Die Probe 1 ist entsprechend T_{H} für einen weiten Wellenlängenberich transparent und luminesziert in einer längeren Wellenlänge als die des auftreffenden Belichtungslicht. Auf die Lumineszenzwellenlänge ist das Filter 5 abstimmbar, d.h. die Durchlässigkeit T_{F2} ist bei einer bestimmten Wellenlänge groß, wobei diese Durchlässigkeitswellenlänge einstellbar ist. Das von der Probe 1 abgestrahlte Licht mit einer bestimmten Lumineszenzwellenlänge wird von der monochromatischen Kamera 6 mit einer Absorption A_{K} aufgenommen.

Der Lichtstrahlengang durch die Filter 3, 5 und die Probe 1 ist bei der Durchlichtanordnung im wesentlichen linear. Auch das Belichtungsfilter 3 ist, insbesondere unabhängig von der Einstellung des abstimmbaren Filters 5, einstellbar.

Das in Fig. 2 dargestellte abstimmbare Filter 5 weist eine Abdeckungsschicht 8 aus einem transparenten Material, eine Flüssigkristallschicht 9, eine Trennschicht 10, eine Flüssigkristallschicht 11, eine Trennschicht 12, eine Flüssigkristallschicht 13 und eine Abdeckungsschicht 14 auf. Das transparente Material kann entweder Glas oder ein lichtdurchlässiger Kunststoff sein. Zwischen den Schichten 8 und 9 bzw. 10 und 11 bzw. 12 und 13 sind Anoden 15, 16 und 17 eines Polarisators 18 angeordnet, die mit der Anode 19 einer Spannungsversorgung verbunden sind. Zwischen den Schichten 9 und 10 bzw. 11 und 12 bzw. 13 und 14 sind Kathoden 20, 21 und 22 des Polarisators 18 angeordnet, die mit der Kathode 23 der Spannungsversorgung verbunden sind. Durch Anlegen einer bestimmten Spannung zwischen Anode und Kathode 19, 23 der Spannungsversorgung ist das Filter 5 auf bestimmte Wellenlängen bzw. Wellenlängenbereiche abstimmbar. Das abstimmbare Filter 5 ist infolgedessen für die eingestellte Wellenlänge durchlässig.

In Fig. 3 ist ein Meßaufbau für die Vorrichtung zur optischen Untersuchung von Proben 1 dargestellt. Die Kamera 6 ist dazu mit einer Dunkelkammer 24 verbunden, in der die Probe 1, die Lichtquelle 2, der Belichtungsfilter 3 und der abstimmbare Filter 5 angeordnet sind. Ein Verarbeitungsmittel 25, bspw. ein Computer, weist ein Steuersystem zur Steuerung der Kamera 6, bspw. deren Belichtung, Zoom und Blende, oder zur Steuerung der Durchlaßwellenlängen des Belichtungsfilters 3 bzw. des abstimmbaren Filters 5 auf. Auch die Lichtintensität und der Wellenlängenbereich des abgestrahlten Lichts der Lichtquelle 2 ist durch das Verarbeitungsmittel 25 steuerbar.

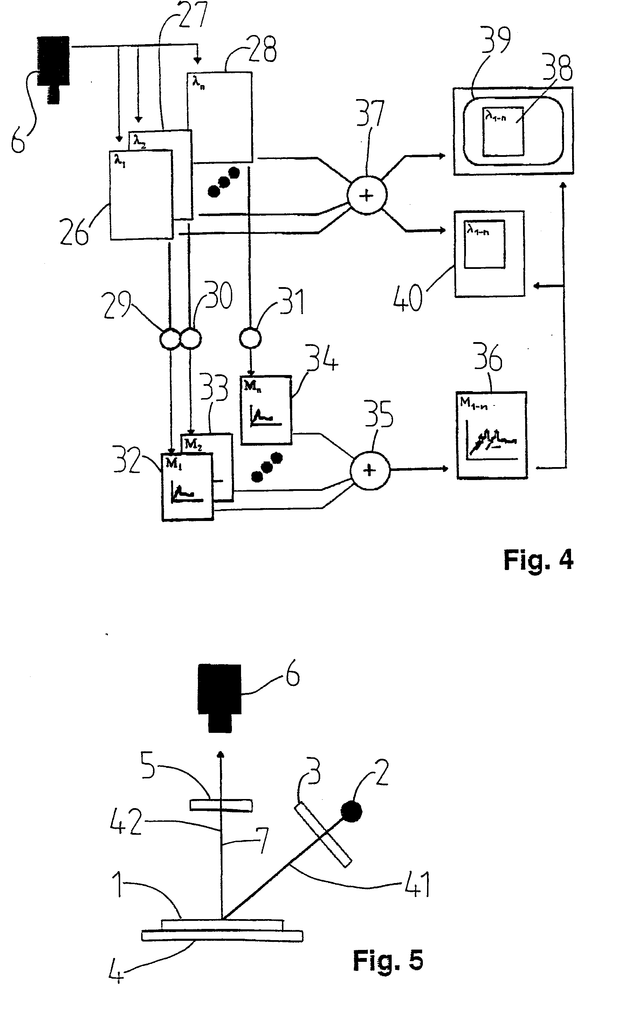

In Fig. 4 ist schematisch das erfindungsgemäße Verfahren zur optischen Untersuchung von Proben 1 dargestellt. Die durch die Kamera 6 aufgenommenen monochromen Einzelbilder 26, 27 und 28 mit jeweils einer bestimmten Lumineszenzwellenlänge werden durch Meßvorrichtungen 29, 30 und 31 ausgewertet, so daß einzelne Intensitätsverteilungsbilder jeweils für eine bestimmte Lumineszenzwellenlänge oder Belichtungswellenlänge entstehen. Die einzelnen Intensitätsbilder können mittels eines Addierers 35 zu einem Gesamtintensitätsverteilungsbild aufaddiert werden.

Die Intensitäten der Einzelbilder 26, 27 und 28 können aber auch zu einem Rot/Grün/Blau-Bild aufaddiert werden. Die Einzelbilder 26, 27 und 28 können dabei mittels eines Farbwerts, der für eine Falschfarbendarstellung optimiert ist, mittels eines Intensitätsaddierers 37 zu einer Gesamtdarstellung 38 aufaddiert werden. Die Gesamtdarstellung 38 kann dann als Rot/Grün/Blau-Bild auf einem Monitor 39 dargestellt oder als Gesamtbild 40 ausgedruckt werden.

In Fig. 5 ist die erfindungsgemäße Vorrichtung in einer Auflichtanordnung nach einem zweiten Ausführungsbeispiel dargestellt. Das durch die Lichtquelle 2 erzeugte Licht wird über ein Belichtungsfilter 3 entlang einer Belichtungsachse 41 auf die Probe 1 abgestrahlt, die auf einem Träger 4 angeordnet ist. Dabei ist die Belichtungswellenlänge des Belichtungsfilters 3 wieder über das Verarbeitungsmittel 25 einstellbar. Die durch das Licht mit der Belichtungswellenlänge angeregte Probe 1 gibt ein Licht mit der Lumineszenzwellenlänge ab, das dann entlang einer Reflexionsachse durch das abstimmbare Filter 5 zur Kamera 6 gelangt, die wieder ein entsprechendes Einzelbild 26, 27, 28 aufnimmt. Die Belichtungsachse 41 und die Reflexionsachse 42 schneiden sich im Bereich der Probe 1, sind jedoch im Meßraum unterschiedlich orientiert.

## Patentansprüche

1. Vorrichtung zur optishchen Untersuchung Proben (1) mit einer Lichiquelle (2), die eine auf einem Träger (4) angeordnete Probe (1) anleuchtet, einer Bildaufnahmeeinrichtung (6) und einem zwischen Probe (1) und Bildaufnahmeeinrichtung (6) angeordneten Filter (5), wobei das Filter (5) für einen Welleniängenbereich des von der Probe (1) ankommenden Lichts durchlässig ist und die Bildaufnahmeeinrichtung (6) das von der Probe (1) ankommende Licht aufnimmt
**dadurch gekennzeichnet,** daß das Filter (5) zwischen Probe (1) und Bildaufnahmeeinrichtung (6) auf unterschiedliche Welliängenbereiche abstimmbar ist.

2. Vorrichtung nach Anspruch 1, dadurch gekennzeichnet, daß die Bildaufnahmeeinrichtung eine Kamera (6), insbesondere zur Aufnahme monochromatischer Einzelbilder (26, 27, 28) einer bestimmten Wellenlänge aufweist. Einzelbilder (26, 27, 28) einer bestimmten Welleniäge aufweist.

3. Vorrichtung nach Anspruch 1 oder 2, dadurch gekennzeichnet daß durch ein Verarbeltungsmittel (25) aus den den unterscheildichen Wellenlängenbereichen zugeordneten Einzelbildem (26, 27, 28) eine Gesarntdarstellung (38) der Probe (1) zusammensetzbar ist.

4. Vorrichtung nach Anspruch 3, dadurch gekennzeichnet, daß das Verarbeitungsmittel (25) jedem der insbesondere monochromatischen Einzelbilder (26, 27, 28) einen Farbwert zuordnet.

5. Vorrichtung nach Anspruch 4, dadurch gekennzeichnet daß der Farbwert der Wellenlänge oder dem Wellenlängenbereich des abstimmbaren Filters (5) entspricht.

6. Vorrichtung nach Anspruch 4, dadurch gekennzeichnet, daß der Farbwert für eine Falschfarbendarstellung optimierbar ist.

7. Vorrichtung nach einem der Ansprüche 3 bis 6, dadurch gekennzeichnet, daß die einzelnen insbesondere monochromatischen Einzelbilder (26, 27, 28) durch das Verarbeitungsmittel (25), insbesondere bzgl. der Lichtintensitätsverteilung, separat auswertbar sind.

8. Vorrichtung nach einem der Ansprüche 3 bis 7, dadurch gekennzeichnet, daß das Verarbeitungsmittel (25) die Bildaufnahmeeinrichtung (6), insbesondere deren Belichtungszeit, Zoom oder Blende steuert.

9. Vorrichtung nach einem der Ansprüche 1 bis 8, dadurch gekennzeichnet, daß in Belichtungsfilter (3) zwischen der Lichtquelle (2) und dem Träger (4) der Probe (1) angeordnet ist.

10. Vorrichtung nach Anspruch 9, dadurch gekennzeichnet, daß das Belichtungsfilter (3), insbesondere durch das Verarbeitungsmittel (25) auf eine bestimmte Wellenlänge abstimmbar ist.

11. Vorrichtung nach einem der Ansprüche 3 bzw. 8 bis 10, dadurch gekennzeichnet, daß das Verarbeitungsmittel (25) die Wellenlängenbereiche für den Lichtdurchlaß des Belichtungsfilters (3) und des abstimmbaren Filters (5) steuert und sich beide Wellenlängenbereiche stets unterscheiden.

12. Vorrichtung nach einem der Ansprüche 1 bis 11, dadurch gekennzeichnet, daß bei einer Durchlichtanordnung die Lichtquelle (2), eine transparente Probe (1), das abstimmbare Filter (5) und die Bildaufnahmeeinrichtung (6) im wesentlichen entlang einer linearen Belichtungsachse (41) angeordnet sind.

13. Vorrichtung nach einem der Ansprüche 1 bis 11, dadurch gekennzeichnet, daß bei einer Auflichtanordnung die Lichtquelle (2) und eine reflektierende Probe (1) entlang einer Belichtungsachse (41) und die reflektierende Probe (1), das abstimmbare Filter (5) und die Bildaufnahmeeinrichtung (6) entlang einer Reflexionsachse (42) angeordnet sind, wobei die Belichtungsachse (41) mit einer anderen Orientierung im Meßraum angeordnet ist, als die Reflexionsachse (42).

14. Vorrichtung nach Anspruch 13, dadurch gekennzeichnet, daß die Filteranordnung eine direkte Bestrahlung der Bildaufnahmeeinrichtung (6) durch das Licht der Lichtquelle (2) verhindert.

15. Vorrichtung nach einem der Ansprüche 9 bis 11, dadurch gekennzeichnet, daß das Belichtungsfilter (3) einen parallel zu mindestens einer Blende mit einem Spalt angeordneten, insbesondere zu der Blende parallel verschiebbaren Monochromator aufweist.

16. Vorrichtung nach einem der Ansprüche 1 bis 15, dadurch gekennzeichnet, daß das abstimmbare Filter (5) durch das Verarbeitungsmittel (25) elektrisch auf einen bestimmten Wellenlängenbereich einstellbar ist.

17. Vorrichtung nach Anspruch 16, dadurch gekennzeichnet, daß das abstimmbare Filter (5) mehrere Filterebenen, insbesondere aus Glas- und Flüssigkristallschichten (8, 10, 12, 14 bzw. 9, 11, 13), aufweist.

18. Verfahren zur optischen Untersuchung von Proben (1), insbesondere mit einer Vorrichtung nach einem der vorhergehenden Ansprüche, wobei eine Probe (1) mit einem Licht mit einer einstellbaren Belichtungswellenlänge bestrahlt wird, die Probe (1) dadurch ein Licht mit einer von der eingestellten Belichtungswellenlänge abweichenden Lumineszenzwellenlänge abstrahlt, das von einer Bildaufnahmeeinrichtung (6) aufgenommen wird,
**dadurch gekennzeichnet,** daß Licht einer bestimmten Lumineszenzwellenlänge durch ein abstimmbares Filter (5) zwischen Probe (1) und Bildaufnahmeeinrichtung (6) durchgelassen und davon ein Einzelbild (26, 27, 28) aufgenommen wird.

19. Verfahren nach Anspruch 18, dadurch gekennzeichnet, daß mehrere Einzelbilder (26, 27, 28) bei unterschiedlichen Lumineszenzwellenlängen aufgenommen werden.

20. Verfahren nach einem der Ansprüche 18 oder 19, dadurch gekennzeichnet, daß die Einzelbilder (26, 27, 28) Monochromdarstellungen sind, die separat engefärbt und zu einem Farbbild zusammengesetzt werden.

21. Verfahren nach einem der Ansprüche 18 bis 20, dadurch gekennzeichnet, daß den Einzelbildern (26, 27, 28) beim Einfärben entweder das der Lumineszenzwellenlänge entsprechende Licht oder ein für eine Falschfarbendarstellung optimiertes Licht zugeordnet wird.

22. Verfahren nach einem der Ansprüche 18 bis 21, dadurch gekennzeichnet, daß die Einzelbilder (26, 27, 28) separat bearbeitet und insbesondere bzgl. der Lichtintensitätsverteilung untersucht werden.
